# EUROPEAN PATENT SPECIFICATION

(11) **EP 3 703 207 B1**
(45) Date of publication and mention of the grant of the patent: **21.09.2022**
(21) Application number: 20159652.5
(22) Date of filing: 26.02.2020
(51) Int. Cl.: H02G 3/08, H02G 3/12

(54) **FLUSH-MOUNTED JUNCTION BOX**
UNTERPUTZANSCHLUSSDOSE
BOÎTE DE RACCORDEMENT ENCASTRÉE

(30) Priority: 26.02.2019 PL 42903819
(43) Date of publication of application: 02.09.2020
(73) Proprietor: Miedzinska-Kozlak, Ewa, 85-344 Bydgoszcz (PL); Kozlak, Jaroslaw, 85-344 Bydgoszcz (PL); Dudek, Krzysztof, 86-070 Dabrowa Chelminska (PL)
(72) Inventor: Dudek, Krzysztof, 86-070 Dabrowa Chelminska (PL)
(74) Representative: Wroblewski, Marcin Jan

(56) References cited:
- FR-A1- 2 868 618
- FR-B1- 2 868 618
- US-A- 5 783 774
- US-A1- 2016 352 087

## Description

The subject matter of the invention is a flush-mounted junction box.

Chinese utility model CN204732809 describes a junction box designed to be installed in a wall, which junction box has a body allowing it to be set in the wall and a slide-out element with teeth that allow to block said slide-out element in an appropriate position in relation to the body. In addition, said junction box may have a circular cross-section.

Chinese patent CN105391009 describes a junction box which has a body and an expansion box as a slide-out element. The position of the expansion box in relation to the body is adjusted by means of connectors and corresponding openings.

Chinese utility model CN204578020 describes a distribution box designed to be installed in a wall, which distribution box has a body and a slide-out element with teeth that allow the size of this box to be adjusted.

Chinese utility model CN206585291 describes a flush-mounted junction box, which has a body and a slide-out element in the form of a sleeve with cylindrical blocking elements that allow to maintain an appropriate length of said slide-out element in relation to the body. Thanks to this, the size of the box can be adjusted to the current depth of the recess in which it is being embedded.

Moreover, Chinese patent CN105896424B describes an adjustable-length junction box, which includes a body and a slide-apart element that makes it possible to adjust the size of the box. The box can be installed in walls.

French patent FR2868618 describes the assembly has two complementary units maintained by an elastically deformable connection zone and by adjustable male and female spacing tubes. The tubes are separable and assembled rigidly in either of two different axial positions. The male and female spacing tubes are telescopic, and an indexing pin is provided for instantaneous radial locking of the two telescopic tubes in position.

Since state-of-the-art solutions allow to put the slide-out element in the body of the box only permanently in a specific position, it would be purposeful to develop an adjustable flush-mounted junction box which allows a provisional (trial) insertion of the slide-out element into the body of the box without the body and the element interlocking when the element is being slid in.

The subject matter of the invention is a flush-mounted junction box that has a body in the form of a cylinder with an inlet opening connected to a supporting flange at its first end, having on its internal surface: longitudinal first grooves and sets of fastenings in the form of teeth. The box also contains a slide-out element in the form of a cylinder with a pass-through opening, having on its external surface: longitudinal ribs that make up fitted connections with the first grooves, as well as sets of fastenings in the form of teeth that - together with the other sets of fastenings in the form of teeth - make up toothed connections, wherein the sets of fastenings in the form of teeth are located on elements whose contours are outlined by openings. The flush-mounted junction box is characterized by the fact that the first grooves run along the fastenings in the form of teeth, and that the body has second grooves that are offset in relation to the first grooves by an angle that prevents the sets of fastenings of the body and the sets of fastenings of the slide-out element from interlocking, wherein the second grooves make up fitted connections with the ribs.

Such a design of the box makes it possible to carry out a trial that involves provisionally inserting the slide-out element into the body of the box without the body and the element interlocking when the element is being slid in.

Preferably, the second grooves are offset in relation to the first grooves by 45°.

Preferably, the first grooves run along the fastenings in the form of teeth in their axis of symmetry.

Preferably, the box has four first grooves, four second grooves, and four fastenings in the form of teeth.

Preferably, the grooves and/or the fastenings in the form of teeth are evenly distributed.

Preferably, at the end opposite the end with the supporting flange, the body has removable plugs.

Preferably, the slide-out element has evenly distributed thickenings on the internal surface.

Preferably, the thickenings have the form of longitudinal bars that are convex on one side and flat on the other.

Preferably, the thickenings also have longitudinal pass-through openings for screws to make it possible to attach electrical equipment and to block the sets of fastenings in the form of teeth.

Preferably, the longitudinal pass-through openings have narrowings. The purpose of the narrowings is to allow to drive in the screws that attach electrical equipment, and consequently to ensure firm fixing of the screws in the junction box, and thus a correct and durable installation of electrical elements in the box.

Preferably, the sections of the walls of the slide-out element that are located opposite to the elements function as supports in which there are pilot holes (coaxial with the pass-through openings) whose purpose is to allow the screws to firmly rest. Alternatively, in the supports there are slanted notches. The effect of the slanted notches is that the tip of the screw (for attaching electrical equipment) passing through the fastenings in the form of teeth slides on the slanted surface of the notch, thus causing the fastening in the form of teeth to be pulled away from the axis of symmetry of the slide-out element, thus ensuring durable anchorage of the slide-out element in the body.

Preferably, on the external surface of the body there is at least one female dovetail and at least one corresponding male dovetail located on the opposite side of the body.

Preferably, the female dovetail and the male dovetail have coaxial pass-through openings, which allow to easily run cables between interconnected boxes.

Preferably, the supporting flange has the first pour-in opening and/or the second pour-in opening, wherein the second pour-in opening is filled with a removable plug. The pour-in opening allows to introduce glue mass in order to permanently embed the body of the box in the wall. In addition, the first pour-in opening also indicates the part of the box that should be on top after installation.

Preferably, the first pour-in opening and/or the second pour-in opening are located in the axes of symmetry of the supporting flange, wherein, the most preferably, the first pour-in opening and the second pour-in opening are located on opposite sections of the supporting flange along a single axis of symmetry.

Preferably, the supporting flange has two pairs of opposite openings designed to receive wedges during the provisional insertion of the body in the wall, and on the external surface of the body there are bases that are aligned with the openings and designed to support the wedges during the provisional insertion of the body in the wall, wherein the pairs of opposite openings are located on at least two diagonals of the supporting flange.

Embodiments of the subject matter of the invention are presented in the drawing where:

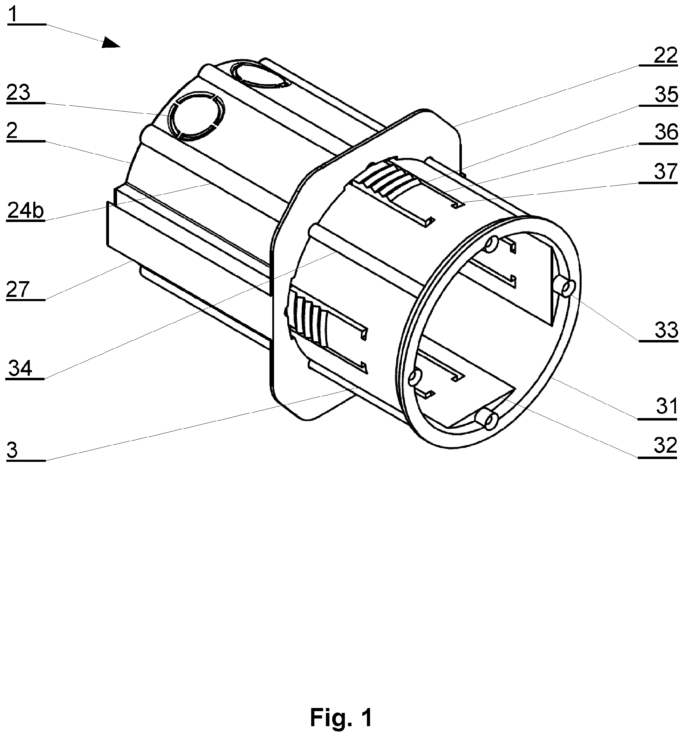

Fig. 1 shows the flush-mounted junction box in a perspective view, when the sets of fastenings of the body and the sets of fastenings of the slide-out element are interlocked;

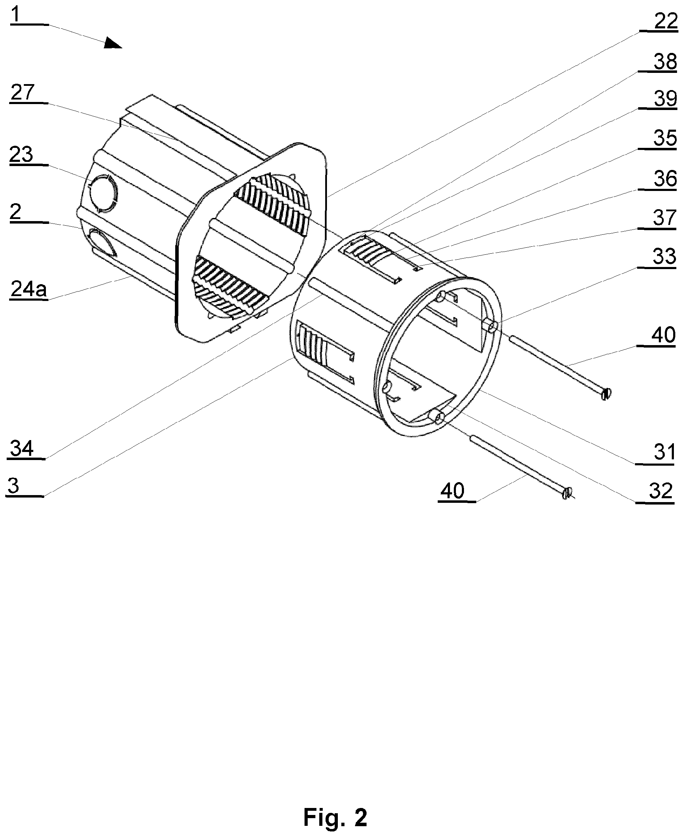

Fig. 2 shows the flush-mounted junction box in an exploded view, when the sets of fastenings of the body and the sets of fastenings of the slide-out element are positioned in a way that allows them to become interlocked;

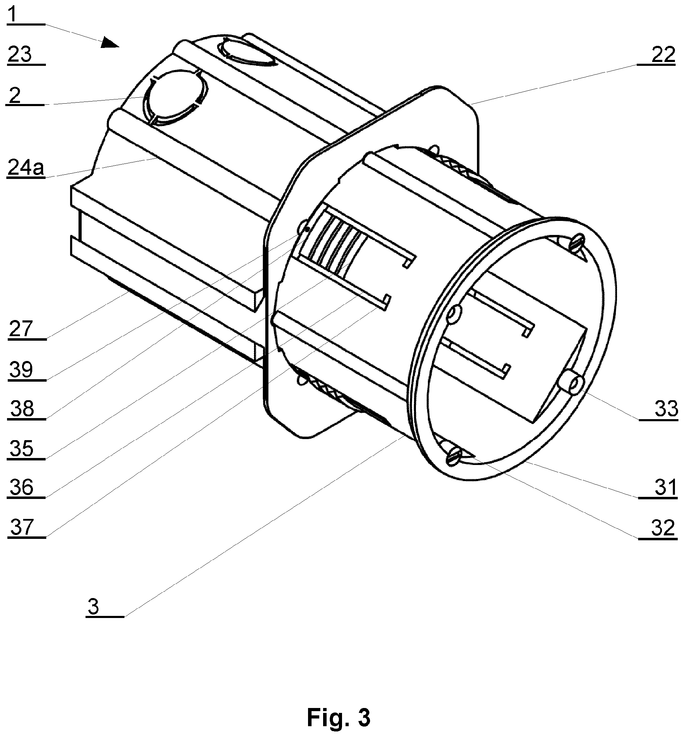

Fig. 3 shows the flush-mounted junction box in a perspective view, when the sets of fastenings of the body and the sets of fastenings of the slide-out element are positioned in a way that allows to carry out a trial that involves provisionally inserting the slide-out element into the body of the box;

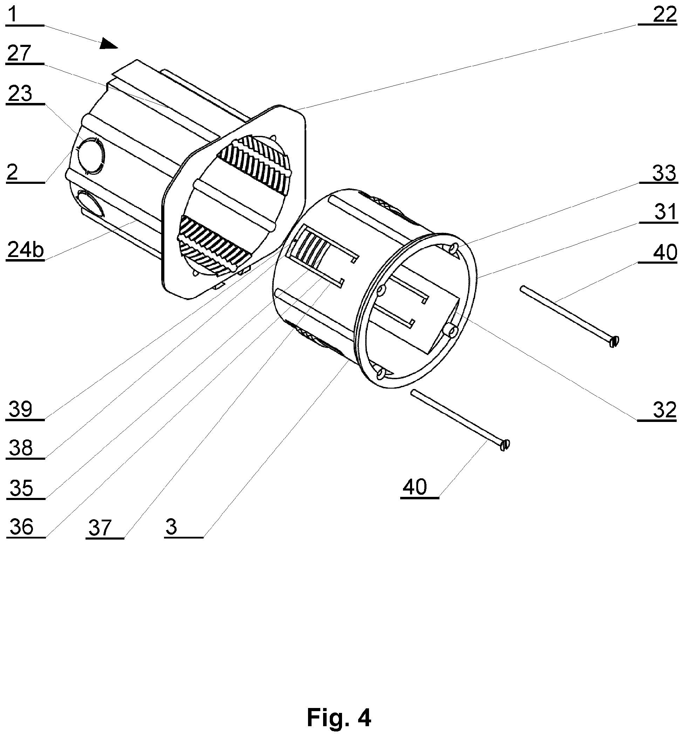

Fig. 4 shows the flush-mounted junction box in an exploded view, when the sets of fastenings of the body and the sets of fastenings of the slide-out element are positioned in a way that allows to carry out a trial that involves provisionally inserting the slide-out element into the body of the box;

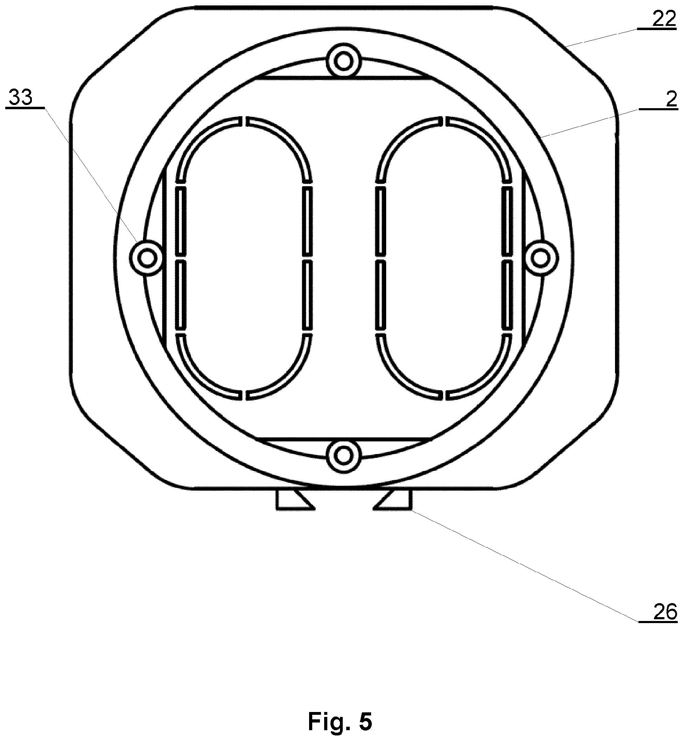

Fig. 5 shows the flush-mounted junction box viewed from behind, when the sets of fastenings of the body and the sets of fastenings of the slide-out element are interlocked;

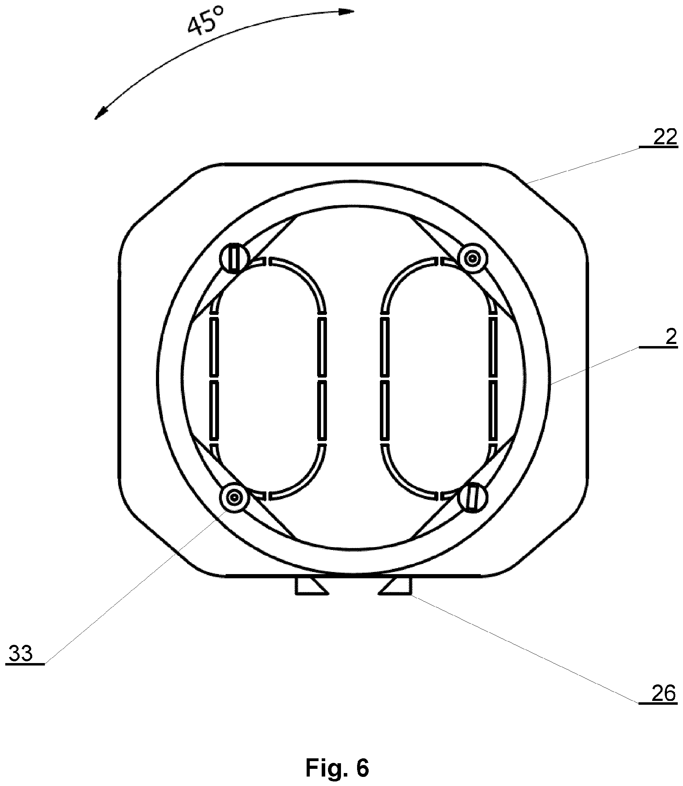

Fig. 6 shows the flush-mounted junction box viewed from behind, when the sets of fastenings of the body and the sets of fastenings of the slide-out element are positioned in a way that allows to carry out a trial that involves provisionally inserting the slide-out element into the body of the box;

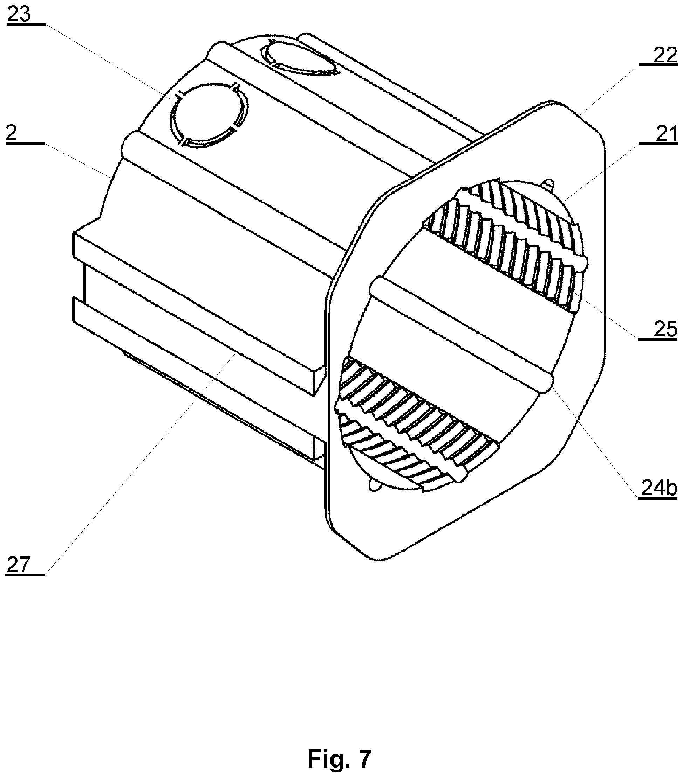

Fig. 7 shows the body of the flush-mounted junction box in a perspective view;

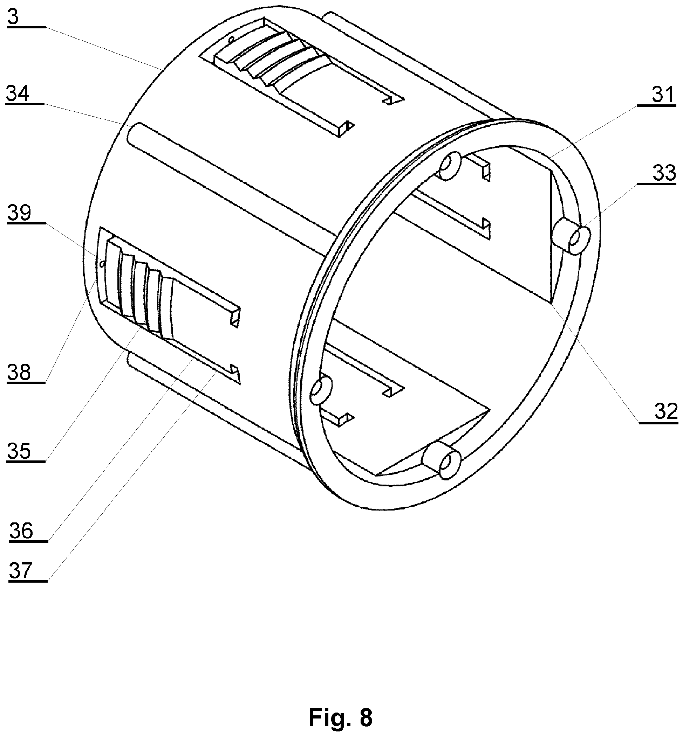

Fig. 8 shows the slide-out element of the flush-mounted junction box in a perspective view;

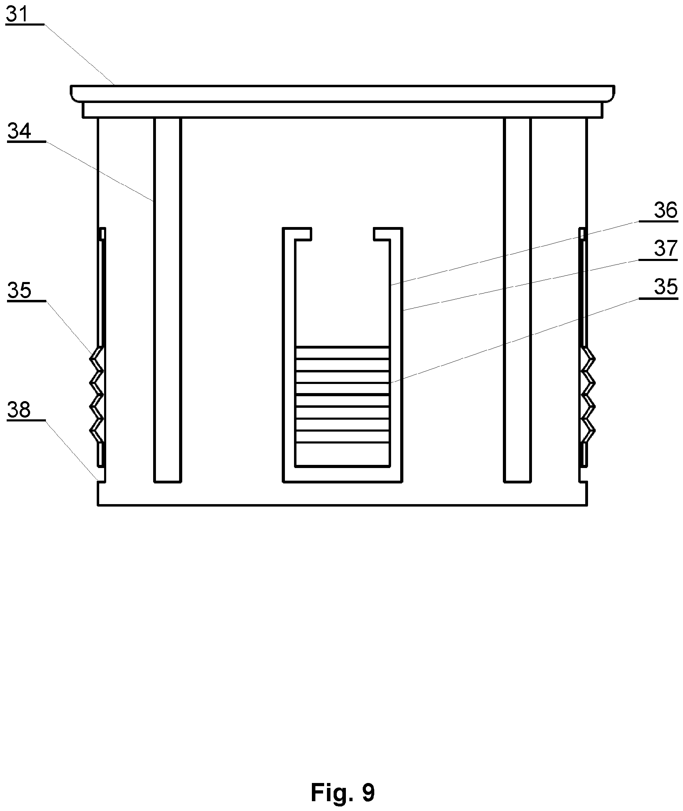

Fig. 9 shows the slide-out element of the flush-mounted junction box viewed from the side;

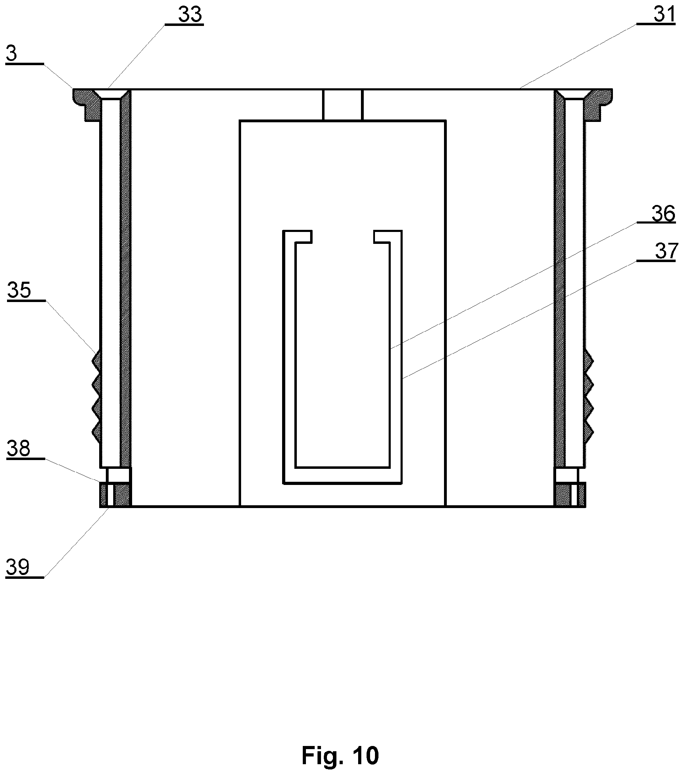

Fig. 10 shows the slide-out element of the flush-mounted junction box in a cross-sectional view.
Fig. 11 shows the flush-mounted junction boxes joined to form a module, in a perspective view;
Fig. 12 shows the flush-mounted junction boxes joined to form a module, viewed from behind.
Fig. 13 shows the slide-out element of the flush-mounted junction box according to the second embodiment, in a cross-sectional view.
Fig. 14 shows the slide-out element of the flush-mounted junction box according to the second embodiment, in a perspective view;
Fig. 15A shows the slide-out element of the flush-mounted junction box according to the second and/or third embodiment, in a cross-sectional view;
Fig. 15B depicts the narrowing that fixes the screw in the slide-out element according to the second and/or third embodiment, in an enlarged cross-sectional view;
Fig. 16 shows the slide-out element of the flush-mounted junction box according to the second embodiment, in a cross-sectional view;
Fig. 17 shows the body of the flush-mounted junction box according to the fourth embodiment, in a perspective view;
Fig. 18 shows the body of the flush-mounted junction box according to the fourth embodiment, viewed from the side;
Fig. 19 shows the body of the flush-mounted junction box according to the fifth embodiment, in a perspective view;
Fig. 20 shows the flush-mounted junction box according to the sixth embodiment, viewed from behind;
Fig. 21 shows diagrammatically the wedging of the junction box of the invention.

### Embodiment 1

The flush-mounted junction box 1 contains the body 2 and the slide-out element 3. The body 2 has the form of a cylinder with the inlet opening 21 connected to the supporting flange 22 located at the first end of the body 2. The supporting flange 22 allows to rest the box against the wall, for faster and more accurate installation. Moreover, at the second end of the body 2, there are removable plugs 23. After these have been removed, electric cables can be routed through the resulting openings. Along the internal surface of the body 2, there are four evenly distributed first grooves 24a, four evenly distributed second grooves 24b, and four evenly distributed sets of fastenings in the form of teeth 25, wherein the grooves 24a run along the fastenings in the form of teeth 25, preferably in their axes of symmetry, and the grooves 24b are offset in relation to the grooves 24a by an angle that makes it impossible for the sets of fastenings 25 of the body 2 and the sets of fastenings 35 of the slide-out element 3 to become interlocked, preferably by 45°.

The slide-out element 3 of the flush-mounted junction box 1 has the form of a cylinder with a pass-through opening 31. On the external surface of the slide-out element 3, four evenly distributed ribs 34 run along the height of the cylinder and make up fitted connections with the grooves 24a and 24b. Moreover, on the external surface of the slide-out element 3, there are also evenly distributed sets of fastenings in the form of teeth 35 which - together with the sets of fastenings in the form of teeth 25 - make up toothed connections. Wherein the sets of fastenings in the form of teeth 35 are located on the elements 36 the shape of which is outlined by the openings 37, thus allowing to reduce the rigidity of the elements 36 and making it possible to insert the slide-out element 3 into the body 2 in a position that prevents the sets of fastenings 25 of the body 2 and the sets of fastenings 35 of the slide-out element 3 from interlocking.

The grooves 24b of the body 2 allow to put the slide-out element 3 inside the body 2 in a position that prevents the sets of fastenings 25 of the body 2 and the sets of fastenings 35 of the slide-out element 3 from interlocking, which makes it possible to provisionally determine the status of the body 2 inserted into the wall (to check whether it fits properly).

In turn, the grooves 24a of the body 2 allow to place the slide-out element 3 in the body 2 in a position where said sets of fastenings 25and 35 become interlocked, which results in permanently positioning the slide-out element 3 in the body 2.

What is more, on the internal surface of the slide-out element 3 there are four evenly distributed thickenings 32, which have the form of bars that are convex on one side and flat on the other, and which run along the height of the slide-out element 3. The thickenings 32 allow to install electrical equipment using clamps. The thickenings 32 also have longitudinal pass-through openings 33 for screws 40 to make it possible to attach electrical equipment and to block the sets of fastenings in the form of teeth 25.

The sections of the walls of the slide-out element 3 that are located opposite to the elements 36 function as supports 38 in which there are pilot holes 39 (coaxial with the openings 33) whose purpose is to allow the screws 40 to firmly rest. The pilot holes 39 allow the screws 40 to rest in such a way that they block the sets of fastenings 25 of the body 2.

Said sets of fastenings 25 of the body 2 - together with the sets of fastenings 35 of the slide-out element 3 - allow to adjust the length of said flush-mounted junction box 1 while maintaining a stable position of the slide-out element 3 in the body 2.

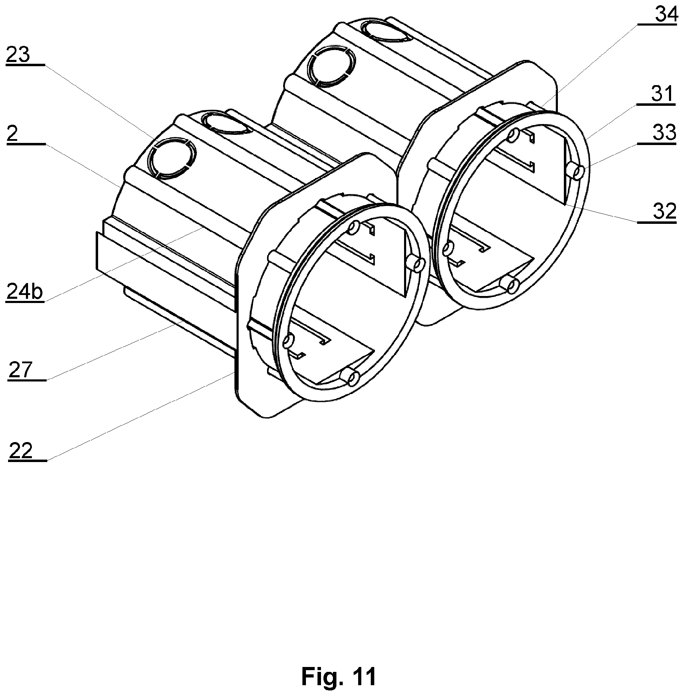

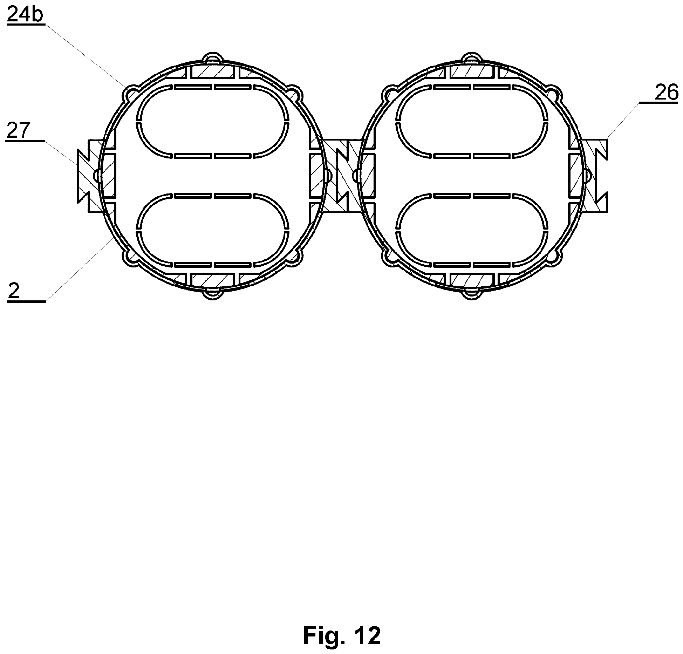

In addition, on the external surface of the body 2 of the flush-mounted junction box 1 there is at least one female dovetail 26, and on the opposite side of the body 2 there is at least one corresponding male dovetail 27. The applied dovetails allow to join said junction boxes to form a module as shown in Fig. 11 and 12.

### Embodiment 2

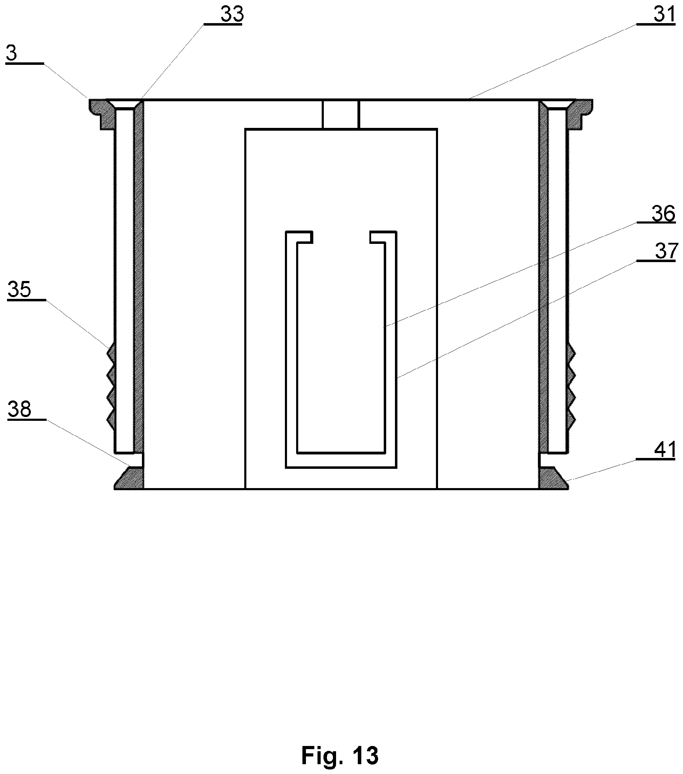

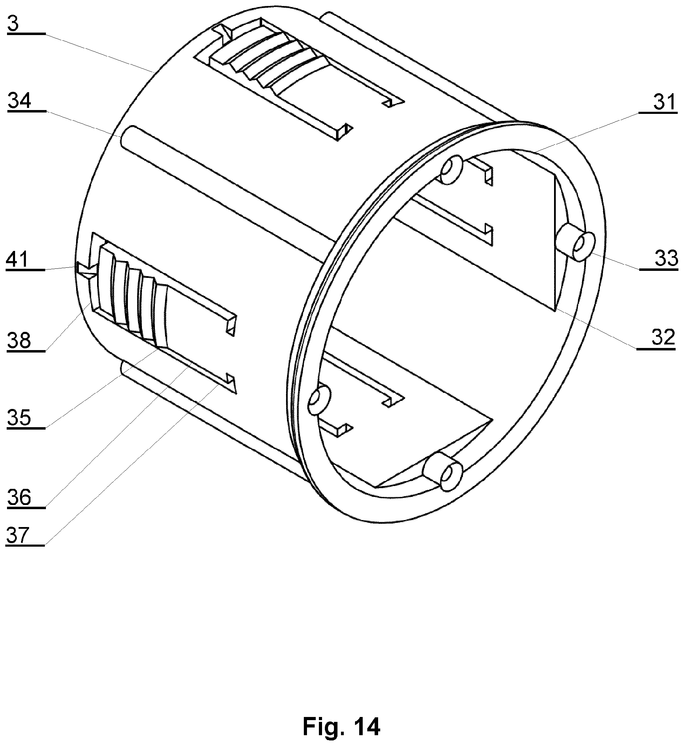

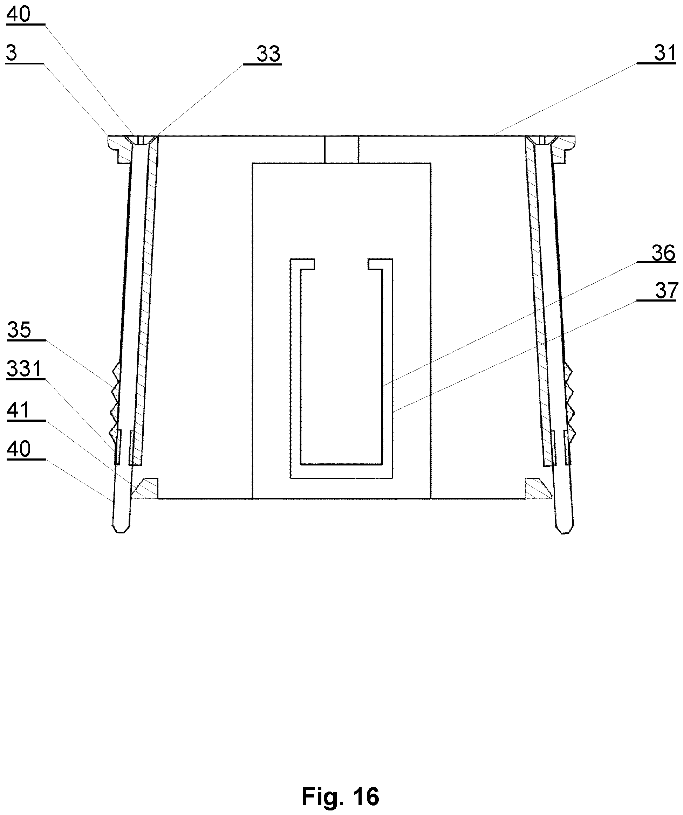

Fig. 13-16 present a flush-mounted junction box as in embodiment 1, but this one's supports 38 have slanted notches 41 instead of pilot holes 39. The effect of the slanted notches 41 is that the tip of the screw 40 (for attaching electrical equipment) passing through the fastenings in the form of teeth 35 slides on the slanted surface of the notch 41, thus causing the fastening in the form of teeth 35 to be pulled away from the axis of symmetry of the slide-out element 3, thus ensuring durable anchorage of the slide-out element 3 in the body 2.

### Embodiment 3

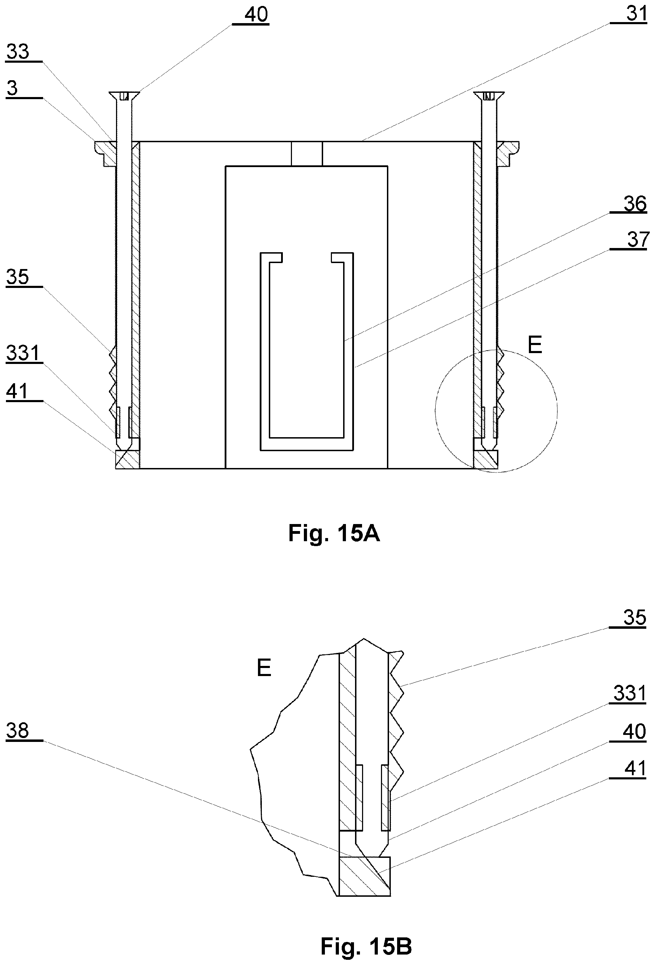

A flush-mounted junction box as in embodiment 1, in which the longitudinal pass-through openings 33 have narrowings 331 as illustrated in Fig. 15. The purpose of the narrowings 331 is to allow to drive in the screws 40 that attach electrical equipment, and consequently to ensure firm fixing of the screws 40 in the junction box 1, and thus a correct and durable installation of electrical elements in the box 1.

### Embodiment 4

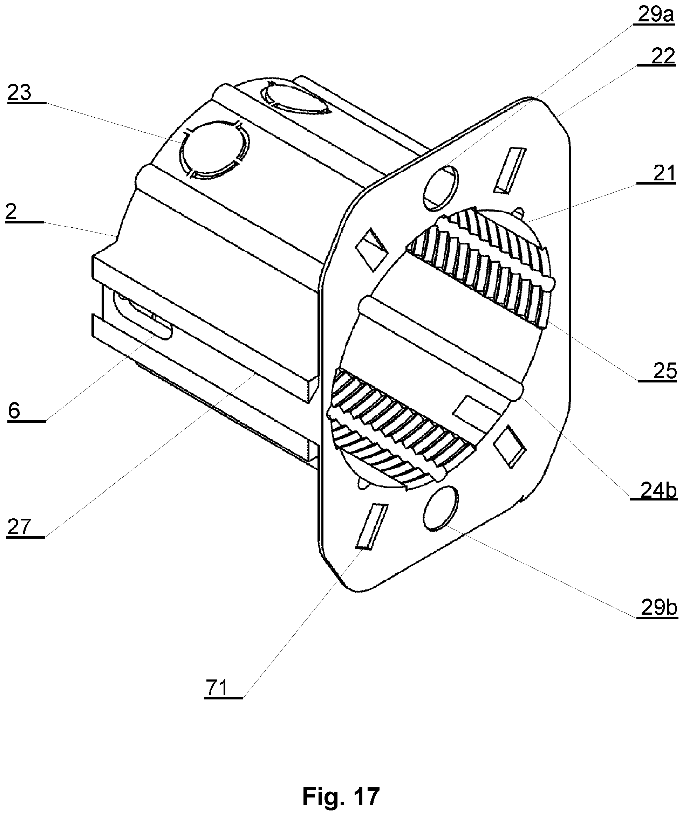

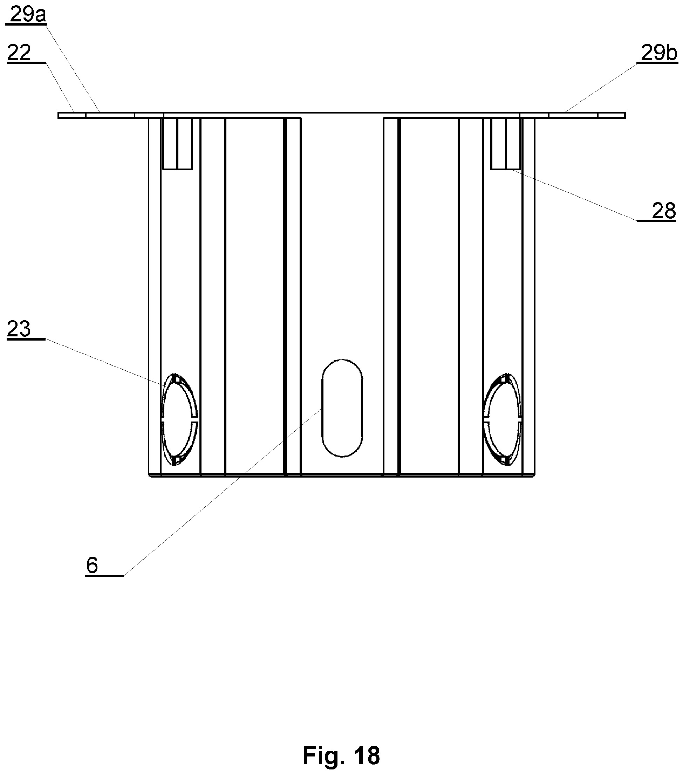

Fig. 17-18 depict the body 2 of the flush-mounted junction box as in embodiments 1 to 3, in which the female dovetail 26 and the male dovetail 27 have coaxial pass-through openings 6. After the bodies 2 have been joined together, the coaxial pass-through openings 6 allow to easily run cables between them.

### Embodiment 5

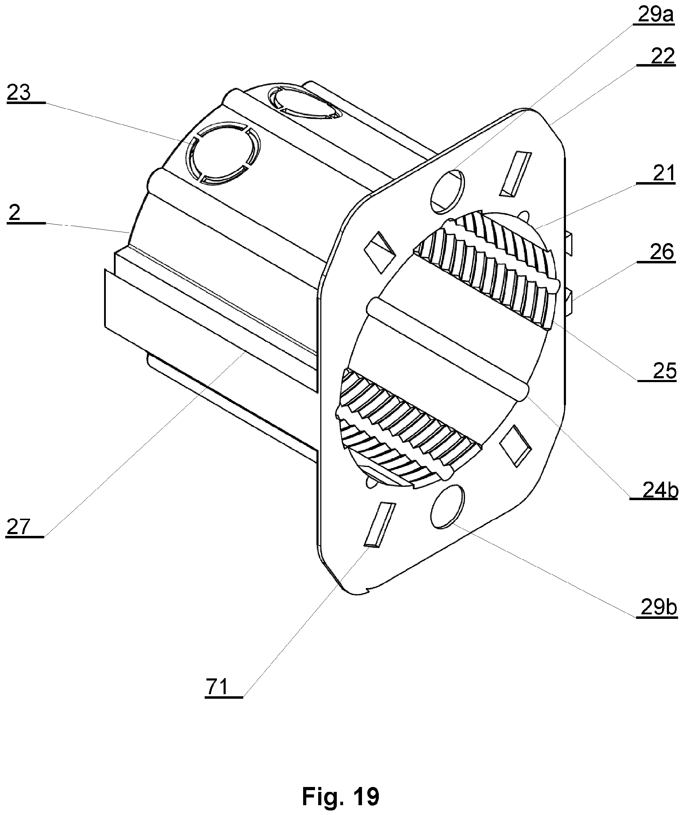

Fig. 19 depicts the body 2 of the flush-mounted junction box as in embodiments 1 to 4, in which the supporting flange 22 additionally has the first pour-in opening 29a and the second pour-in opening 29b, wherein the second pour-in opening 29b is filled with a removable plug. The first pour-in opening 29a and the second pour-in opening 29b are located on opposite sections of the supporting flange 22 along a single axis of symmetry. The pour-in openings 29a and 29b allow to introduce glue mass in order to permanently embed the body 2 of the flush-mounted junction box 1 in the wall. In addition, the first pour-in opening 29a also indicates the part of the flush-mounted junction box 1 that should be on top after installation.

### Embodiment 6

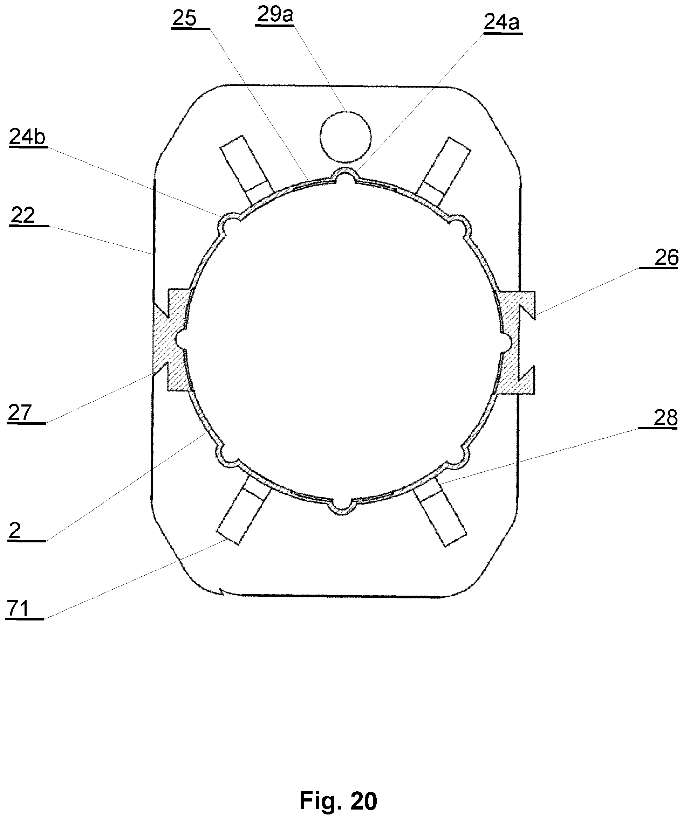

Fig. 20 depicts the body 2 of the flush-mounted junction box 1 as in embodiments 1 to 5, in which the supporting flange 22 has two pairs of opposite openings 71 designed to receive wedges 8 during the provisional insertion of the body 2 in the wall. On the external surface of the body 2 there are also bases 28 that are aligned with the openings 71 (as shown in Fig. 20). The pairs of opposite openings 71 are located on the diagonals of the supporting flange 22.

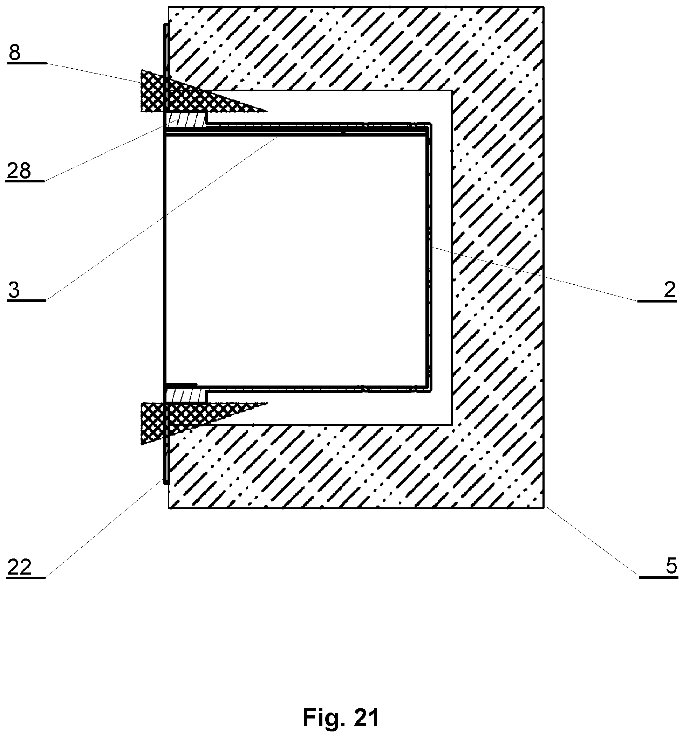

Fig. 21 depicts the body 2 provisionally placed in the wall using wedges 8 inserted into the openings 71. In order to install the flush-mounted junction box 1 in the wall 5, the body 2 of the junction box 1 is inserted into a recess in the masonry wall 5, and then the wedges 8 are inserted into the openings 71 so that they rest against the base 28 and the masonry wall 5 thus forming a rigid connection.

After the body 2 has been provisionally inserted into the masonry wall 5, glue mass can be introduced into the first pour-in opening 29a and/or the second pour-in opening 29b in order to permanently embed the body 2 in the masonry wall 5.

## Claims

1. A flush-mounted junction box (1), which includes:
- a body (2) in the form of a cylinder with an inlet opening (21) connected to a supporting flange (22) at its first end, having on its internal surface: longitudinal first grooves (24a) and sets of fastenings in the form of teeth (25);
- a slide-out element (3) in the form of a cylinder with a pass-through opening (31), having on its external surface: longitudinal ribs (34) that make up fitted connections with the first grooves (24a), as well as sets of fastenings in the form of teeth (35) that, together with the sets of fastenings in the form of teeth (25) of the body (2), make up toothed connections, wherein the sets of fastenings in the form of teeth (35) of the slide-out element (3) are located on elements (36) whose contours are outlined by openings (37);
wherein
- the first grooves (24a) run along the fastenings in the form of teeth (25) of the body (2)
and the body (2) has second grooves (24b) that are offset in relation to the first grooves (24a) by an angle that prevents the sets of fastenings (25) of the body (2) and the sets of fastenings (35) of the slide-out element (3) from interlocking, wherein the second grooves (24b) make up fitted connections with the ribs (34).

2. The flush-mounted junction box according to claim 1, characterized that the second grooves (24b) are offset in relation to the first grooves (24a) by 45°.

3. The flush-mounted junction box according to claims 1 or 2, characterized that the first grooves (24a) run along the fastenings in the form of teeth (25) of the body (2) in their axis of symmetry.

4. The flush-mounted junction box according to claims 1 or 2 or 3, characterized that the body (2) has four first grooves (24a), four second grooves (24b), and four fastenings in the form of teeth (25).

5. The flush-mounted junction box according to any of the claims from 1 to 4, characterized that the grooves (24a, 24b, 34) and/or the fastenings in the form of teeth (25, 35) are evenly distributed.

6. The flush-mounted junction box according to any of the claims from 1 to 5, characterized that at the end opposite the end with the supporting flange (22) the body (2) has removable plugs (23).

7. The flush-mounted junction box according to any of the claims from 1 to 6, characterized that the slide-out element (3) has evenly distributed thickenings (32) on the internal surface.

8. The flush-mounted junction box according to claim 7, characterized that the thickenings (32) preferably have the form of longitudinal bars that are convex on one side and flat on the other.

9. The flush-mounted junction box according to claims 7 or 8, characterized that the thickenings (32) also have longitudinal pass-through openings (33) for screws (40) to make it possible to attach electrical equipment and to block the sets of fastenings in the form of teeth (25) of the body (2).

10. The flush-mounted junction box according to claim 9, characterized that the longitudinal pass-through openings (33) also have a narrowing (331).

11. The flush-mounted junction box according to any of the claims from 7 to 10, characterized that the sections of the walls of the slide-out element (3) that are located opposite to the elements (36) function as supports (38) in which:
- there are pilot holes (39), which are coaxial with the openings (33), and whose purpose is to allow the screws (40) to firmly rest, or
- there are slanted notches (41).

12. The flush-mounted junction box according to any of the claims from 1 to 11, characterized that on the external surface of the body (2) there is at least one female dovetail (26) and at least one corresponding male dovetail (27) located on the opposite side of the body (2).

13. The flush-mounted junction box according to claim 12, characterized that the female dovetail (26) and the male dovetail (27) have coaxial pass-through openings (6).

14. The flush-mounted junction box according to any of the claims from 1 to 13, characterized that the supporting flange (22) has the first pour-in opening (29A) and/or the second pour-in opening (29B), wherein the second pour-in opening (29B) is filled with a removable plug; preferably, the first pour-in opening (29A) and/or the second pour-in opening (29B) are located in the axes of symmetry of the supporting flange (22); the most preferably, the first pour-in opening (29A) and the second pour-in opening (29B) are located on opposite sections of the supporting flange (22) along a single axis of symmetry.

15. The flush-mounted junction box according to any of the claims from 1 to 14, characterized that the supporting flange (22) has two pairs of opposite openings (71) designed to receive wedges (8) during the provisional insertion of the body (2) in the wall, and that on the external surface of the body (2) there are bases (28) that are aligned with the openings (71) and designed to support the wedges (8) during the provisional insertion of the body (2) in the wall, wherein the pairs of opposite openings (71) are located on at least two diagonals of the supporting flange (22).

## Patentansprüche

1. Eine Unterputz-Anschlussdose (1), die Folgendes umfasst:
- einen Körper (2) in Form eines Zylinders mit einer Einlassöffnung (21), die an ihrem ersten Ende mit einem Stützflansch (22) verbunden ist, der an seiner Innenfläche: erste Längsnuten (24a) und Sätze von Befestigungselementen in Form von Zähnen (25) aufweist
- ein zylinderförmiges Auszugselement (3) mit einer Durchgangsöffnung (31), das an seiner Außenfläche aufweist: Längsrippen (34), die Passverbindungen mit den ersten Nuten (24a) bilden, sowie Befestigungssätze in Form von Zähnen (35), die zusammen mit den Befestigungssätzen in Form von Zähnen (25) des Körpers (2) Zahnverbindungen bilden, **dadurch gekennzeichnet, dass** die Befestigungssätze in Form von Zähnen (35) des Ausschiebeelements (3) auf Elementen (36) angeordnet sind, deren Konturen durch Öffnungen (37) umrissen sind,
wobei
- die ersten Rillen (24a) entlang der Befestigungselemente in Form von Zähnen (25) des Körpers (2) verlaufen
und
der Körper (2) zweite Nuten (24b) aufweist, die in Bezug auf die ersten Nuten (24a) um einen Winkel versetzt sind, der verhindert, dass die Sätze von Befestigungen (25) des Körpers (2) und die Sätze von Befestigungen (35) des Ausschiebeelements (3) ineinander greifen, wobei die zweiten Nuten (24b) Passverbindungen mit den Rippen (34) ausbilden.

2. Unterputz-Anschlussdose nach Anspruch 1, **dadurch gekennzeichnet, dass** die zweiten Nuten (24b) gegenüber den ersten Nuten (24a) um 45° versetzt sind.

3. Unterputz-Anschlussdose nach Anspruch 1 oder 2, **dadurch gekennzeichnet, dass** die ersten Nuten (24a) in Form von Zähnen (25) des Körpers (2) in ihrer Symmetrieachse entlang der Befestigungen verlaufen.

4. Unterputz-Anschlussdose nach Anspruch 1 oder 2 oder 3, **dadurch gekennzeichnet, dass** der Körper (2) vier erste Nuten (24a), vier zweite Nuten (24b) und vier Befestigungen in Form von Zähnen (25) aufweist.

5. Unterputz-Anschlussdose nach einem der Ansprüche 1 bis 4, **dadurch gekennzeichnet, dass** die Nuten (24a, 24b, 34) und/oder die Befestigungen in Form von Zähnen (25, 35) gleichmäßig verteilt sind.

6. Unterputz-Anschlussdose nach einem der Ansprüche 1 bis 5, **dadurch gekennzeichnet, dass** der Körper (2) an dem Ende, das dem Ende mit dem Stützflansch (22) gegenüberliegt, abnehmbare Stopfen (23) aufweist.

7. Unterputz-Anschlussdose nach einem der Ansprüche 1 bis 6, **dadurch gekennzeichnet, dass** das Ausschiebeelement (3) auf der Innenfläche gleichmäßig verteilte Verdickungen (32) aufweist.

8. Unterputzdose nach Anspruch 7, **dadurch gekennzeichnet, dass** die Verdickungen (32) vorzugsweise die Form von Längsstegen haben, die auf einer Seite konvex und auf der anderen Seite flach sind.

9. Unterputz-Anschlussdose nach Anspruch 7 oder 8, **dadurch gekennzeichnet, dass** die Verdickungen (32) auch Längsdurchgangsöffnungen (33) für Schrauben (40) aufweisen, um die Befestigung von elektrischen Geräten zu ermöglichen und die Befestigungssätze in Form von Zähnen (25) des Körpers (2) zu blockieren.

10. Unterputz-Anschlussdose nach Anspruch 9, **dadurch gekennzeichnet, dass** die Längsdurchführungsöffnungen (33) ebenfalls eine Verengung (331) aufweisen.

11. Unterputz-Anschlussdose nach einem der Ansprüche 7 bis 10, **dadurch gekennzeichnet, dass** die unterhalb der Elemente (36) befindlichen Wandabschnitte des Auszugselements (3) als Stützen (38) fungieren, in denen:
Vorbohrungen (39) vorhanden sind, die koaxial zu den Öffnungen (33) verlaufen und deren Zweck es ist, den festen Sitz der Schrauben (40) zu ermöglichen, oder
- schräge Kerben (41) vorhanden sind.

12. Unterputz-Anschlussdose nach einem der Ansprüche 1 bis 11, **dadurch gekennzeichnet, dass** auf der Außenfläche des Körpers (2) mindestens ein weiblicher Schwalbenschwanz (26) und mindestens ein entsprechender männlicher Schwalbenschwanz (27) vorhanden ist, der sich auf der gegenüberliegenden Seite des Körpers (2) befindet.

13. Unterputz-Anschlussdose nach Anspruch 12, **dadurch gekennzeichnet, dass** der weibliche Schwalbenschwanz (26) und der männliche Schwalbenschwanz (27) koaxiale Durchgangsöffnungen (6) aufweisen.

14. Unterputz-Anschlussdose nach einem der Ansprüche 1 bis 13, **dadurch gekennzeichnet, dass** der Stützflansch (22) die erste Einfüllöffnung (29A) und/oder die zweite Einfüllöffnung (29B) aufweist, wobei die zweite Einfüllöffnung (29B) mit einem herausnehmbaren Stopfen gefüllt ist; vorzugsweise liegen die erste Einfüllöffnung (29A) und/oder die zweite Einfüllöffnung (29B) in den Symmetrieachsen des Stützflansches (22); am meisten bevorzugt liegen die erste Einfüllöffnung (29A) und die zweite Einfüllöffnung (29B) auf gegenüberliegenden Abschnitten des Stützflansches (22) entlang einer einzigen Symmetrieachse.

15. Unterputz-Anschlussdose nach einem der Ansprüche 1 bis 14, **dadurch gekennzeichnet, dass** der Stützflansch (22) zwei Paare von gegenüberliegenden Öffnungen (71) aufweist, die zur Aufnahme von Keilen (8) beim provisorischen Einsetzen des Körpers (2) in die Wand ausgebildet sind, und dass auf der Außenfläche des Körpers (2) Sockel (28) vorhanden sind, die mit den Öffnungen (71) fluchten und dazu bestimmt sind, die Keile (8) während des provisorischen Einsetzens des Körpers (2) in die Wand zu stützen, wobei die Paare gegenüberliegender Öffnungen (71) auf mindestens zwei Diagonalen des Stützflansches (22) angeordnet sind.

## Revendications

1. Une boîte de jonction encastrée (1), qui comprend :
- un corps (2) en forme de cylindre avec une ouverture d'entrée (21) reliée à une bride de support (22) à sa première extrémité, ayant sur sa surface interne : des premières rainures longitudinales (24a) et des ensembles de fixations sous forme de dents (25)
- un élément coulissant (3) sous forme d'un cylindre avec une ouverture traversante (31), ayant sur sa surface externe : des nervures longitudinales (34) qui constituent des connexions ajustées avec les premières rainures (24a), ainsi que des ensembles de fixations sous forme de dents (35) qui, conjointement avec les ensembles de fixations sous forme de dents (25) du corps (2), constituent des connexions dentées, dans laquelle les ensembles de fixations sous forme de dents (35) de l'élément coulissant (3) sont situés sur des éléments (36) dont les contours sont délimités par des ouvertures (37),
dans laquelle
- les premières rainures (24a) s'étendent le long des fixations sous forme de dents (25) du corps (2)
et
le corps (2) comporte des secondes rainures (24b) qui sont décalées par rapport aux premières rainures (24a) d'un angle qui empêche les ensembles de fixations (25) du corps (2) et les ensembles de fixations (35) de l'élément coulissant (3) de s'emboîter, dans laquelle les secondes rainures (24b) constituent des connexions ajustées avec les nervures (34).

2. La boîte de jonction encastrée selon la revendication 1, **caractérisée en ce que** les secondes rainures (24b) sont décalées par rapport aux premières rainures (24a) de 45°.

3. La boîte de jonction encastrée selon les revendications 1 ou 2, **caractérisée en ce que** les premières rainures (24a) s'étendent le long des fixations en forme de dents (25) du corps (2) dans leur axe de symétrie.

4. La boîte de jonction encastrée selon les revendications 1 ou 2, ou 3, **caractérisée en ce que** le corps (2) comporte quatre premières rainures (24a), quatre secondes rainures (24b), et quatre fixations sous forme de dents (25).

5. La boîte de jonction encastrée selon l'une quelconque des revendications de 1 à 4, **caractérisée en ce que** les rainures (24a, 24b, 34) et/ou les fixations en forme de dents (25, 35) sont distribuées régulièrement.

6. La boîte de jonction encastrée selon l'une quelconque des revendications de 1 à 5, **caractérisée en ce que**, à l'extrémité opposée à l'extrémité comportant la bride de support (22), le corps (2) comporte des bouchons amovibles (23).

7. La boîte de jonction encastrée selon l'une quelconque des revendications de 1 à 6, **caractérisée en ce que** l'élément coulissant (3) comporte des épaississements (32) régulièrement distribués sur la surface interne.

8. La boîte de jonction encastrée selon la revendication 7, **caractérisée en ce que** les épaississements (32) ont de préférence la forme de barres longitudinales qui sont convexes d'un côté et plates de l'autre.

9. La boîte de jonction encastrée selon les revendications 7 ou 8, **caractérisée en ce que** les épaississements (32) comportent également des ouvertures longitudinales traversantes (33) pour des vis (40) afin de permettre la fixation des équipements électriques et de bloquer les ensembles de fixations en forme de dents (25) du corps (2).

10. La boîte de jonction encastrée selon la revendication 9, **caractérisée en ce que** les ouvertures traversantes longitudinales (33) comportent également un rétrécissement (331).

11. La boîte de jonction encastrée selon l'une quelconque des revendications de 7 à 10, **caractérisée en ce que** les sections des parois de l'élément coulissant (3) qui sont situées sous les éléments (36) fonctionnent comme des supports (38) dans lesquels :
- il y a des trous pilotes (39), qui sont coaxiaux avec les ouvertures (33), et dont le but est de permettre aux vis (40) de s'appuyer fermement, ou
- il y a des encoches inclinées (41).

12. La boîte de jonction encastrée selon l'une quelconque des revendications de 1 à 11, **caractérisée en ce que** sur la surface externe du corps (2) il y a au moins une queue d'aronde femelle (26) et au moins une queue d'aronde mâle correspondante (27) située sur le côté opposé du corps (2).

13. La boîte de jonction encastrée selon la revendication 12, **caractérisée en ce que** la queue d'aronde femelle (26) et la queue d'aronde mâle (27) comportent des ouvertures traversantes coaxiales (6).

14. La boîte de jonction encastrée selon l'une quelconque des revendications de 1 à 13, **caractérisée en ce que** la bride de support (22) comporte la première ouverture de versement (29A) et/ou la seconde ouverture de versement (29B), la seconde ouverture de versement (29B) étant remplie d'un bouchon amovible ; de préférence, la première ouverture de versement (29A) et/ou la seconde ouverture de versement (29B) sont situées dans les axes de symétrie de la bride de support (22) ; le plus préférablement, la première ouverture de versement (29A) et la seconde ouverture de versement (29B) sont situées sur des sections opposées de la bride de support (22) le long d'un seul axe de symétrie.

15. La boîte de jonction encastrée selon l'une quelconque des revendications de 1 à 14, **caractérisée en ce que** la bride de support (22) comporte deux paires d'ouvertures opposées (71) destinées à recevoir des cales (8) lors de l'insertion provisoire du corps (2) dans la paroi, et **en ce que** sur la surface externe du corps (2) il y a des bases (28) qui sont alignées avec les ouvertures (71) et destinées à supporter les cales (8) pendant l'insertion provisoire du corps (2) dans la paroi, dans laquelle les paires d'ouvertures opposées (71) sont situées sur au moins deux diagonales de la bride de support (22).
